# FASCICULE DE BREVET EUROPEEN

(11) **EP 0 589 510 B1**
(45) Date de publication et mention de la délivrance du brevet: **16.08.2000**
(21) Numéro de dépôt: 93202658.6
(22) Date de dépôt: 14.09.1993
(51) Int. Cl.: C08G 75/02

(54) **Procédé pour la fabrication de poly(sulfure de phénylène)**
Verfahren zur Herstellung von Polyphenylensulfid
Process for the production of polyphenylene sulphide

(30) Priorité: 25.09.1992 BE 9200842
(43) Date de publication de la demande: 30.03.1994
(73) Titulaire: SOLVAY (Société Anonyme), 1050 Bruxelles (BE)
(72) Inventeur: Van Hoyweghen, Danny, B-3001 Heverlee (BE); Coisne, Jean-Marc, B-5190 Jemeppe-sur-Sambre (BE)
(74) Mandataire: Eischen, Roland

(56) Documents cités:
- EP-A- 0 100 551
- EP-A- 0 323 723
- EP-A- 0 325 061
- EP-A- 0 348 189
- EP-A- 0 355 499
- US-A- 4 350 810
- DATABASE WPI Week 8806, 6 Avril 1988 Derwent Publications Ltd., London, GB; AN 88-038299 & JP-A-62 190 228 (DAINIPPON INK) 20 Aoüt 1987

## Description

La présente invention concerne un procédé pour la fabrication de poly(sulfure de phénylène), à partir de composés aromatiques dihalogénés et de sulfures de métaux alcalins ou alcalino-terreux.

Le poly(sulfure de phénylène) (appelé ci-après plus simplement PPS) présente une excellente stabilité thermique et une très bonne résistance chimique qui en font un matériau de choix pour le moulage de pièces utilisables notamment dans des applications électriques et électroniques et dans l'industrie automobile.

Un procédé bien connu pour la fabrication de polysulfure d'arylène (PAS) comprend le chauffage d'un sulfure de métal alcalin, le plus souvent du sulfure de sodium hydraté, dans un solvant polaire pour en éliminer l'eau d'hydratation, suivi de l'addition d'un composé aromatique dihalogéné, en particulier le p-dichlorobenzène, et de polymérisation à température plus élevée [voir par exemple brevet US-A-3 354 129 (PHILLIPS PETROLEUM)]. Ce procédé ne conduit toutefois pas à des PAS de poids moléculaire suffisamment élevé.

Il a déjà été proposé de remédier à cet inconvénient en introduisant dans le milieu de polymérisation du PAS des additifs permettant d'augmenter le degré de polymérisation de ce dernier. Des additifs efficaces se sont révélés être les carboxylates de métaux alcalins [brevet US-A-3 919 177 (PHILLIPS PETROLEUM)].

L'utilisation de ces additifs présente toutefois un inconvénient dans la mesure où, pour qu'ils soient efficaces, il faut généralement en mettre en oeuvre une quantité élevée, substantiellement équimolaire à la quantité de sulfure de métal alcalin. Outre le coût de ces additifs, cette quantité élevée a le désavantage d'engendrer la présence de quantités importantes d'acides organiques polluant les eaux résiduaires résultant de la récupération du PAS.

Il a également été proposé de fabriquer des PAS à haut poids moléculaire, sans faire usage de ces additifs, en opérant en deux étapes en présence d'eau : dans une première étape, on prépare un prépolymère par réaction d'un sulfure de métal alcalin avec un composé aromatique dihalogéné, en présence d'un amide organique contenant 0,5 à 2,4 moles d'eau par mole de sulfure; dans une seconde étape, effectuée en présence de 2,5 à 7 moles d'eau par mole de sulfure, le prépolymère est maintenu à haute température (245 à 290 °C) dans un système biphasique pendant 1 à 50 heures [demande de brevet EP-A-0 166 368 (KUREHA)].

Ce procédé présente l'inconvénient de devoir être effectué en deux étapes, ce qui en complique l'exécution et en allonge la durée. De plus, la teneur en eau du milieu au cours de la première étape doit être strictement maintenue à des valeurs relativement faibles si l'on veut éviter la décomposition du PAS formé. Ces valeurs sont inférieures à la teneur en eau des sulfures de métaux alcalins accessibles commercialement qui sont généralement des sels fort hydratés, tels que les trihydrates, les pentahydrates et les nonahydrates, ce qui implique une étape de déshydratation de ces sulfures et l'élimination de l'eau en excès avant de pouvoir procéder à la polymérisation proprement dite.

Dans le document EP-A-0 355 499, on a proposé de procéder à la synthèse de PAS en faisant réagir une source de soufre avec un sel métallique d'acide ω-hydroxycarboxylique et un composé aromatique dihalogéné, dans un solvant organique polaire.

On a aussi proposé de procéder à la synthèse de PAS à haut poids moléculaire dans des réacteurs dont les parties en contact avec le mélange réactionnel sont constituées ou revêtues de titane, ce qui permet d'éviter l'étape de déshydratation du sulfure [demande de brevet EP-A-226 998 (KUREHA)]. Pour éviter des réactions de décomposition au cours de la polymérisation, il reste toutefois nécessaire de procéder en deux étapes, la première étape devant être effectuée pendant une longue durée à basse température.

On a enfin proposé de procéder à la synthèse de PAS à haut poids moléculaire en opérant en présence, à la fois, d'eau et d'un carboxylate de métal alcalin [demande de brevet EP-A-0 374 719 (PHILLIPS PETROLEUM)]. Selon ce procédé, la quantité de carboxylate de métal alcalin doit être comprise entre 0,002 et 0,05 mole par mole de sulfure de métal alcalin et la quantité d'eau présente pendant la polymérisation doit être comprise entre 1,02 et 2,1 moles par mole de sulfure de métal alcalin.

Le contrôle de la teneur en eau du milieu de polymérisation entre ces valeurs relativement faibles implique à son tour une étape de déshydratation de la source de soufre utilisée (sulfure de sodium et produit de réaction entre hydrogénosulfure et hydroxyde de sodium en solution aqueuse).

La présente invention vise dès lors à fournir un procédé de fabrication de PPS à haut poids moléculaire effectué en une étape et en présence, conjointement, d'eau et d'un carboxylate de métal alcalin ou alcalino-terreux qui ne présente pas les inconvénients des procédés mentionnés ci-dessus.

L'invention concerne à cet effet la fabrication de poly-(sulfure de phénylène) consistant à polymériser en une étape un mélange réactionnel comprenant les constituants suivants :
- un sulfure de métal alcalin ou alcalino-terreux (a);
- un solvant organique polaire (b);
- un carboxylate de métal alcalin ou alcalino-terreux (c);
- de l'eau (d);
- un p-dihalobenzène (e);
   caractérisé par la combinaison, dans ledit mélange, d'un rapport molaire 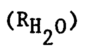 entre l'eau (d) et le sulfure (a) mis en oeuvre tel que : 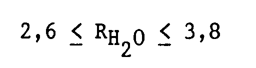 et d'un rapport molaire (R_{ADD}) entre le carboxylate (c) et le sulfure (a) mis en oeuvre tel que :

   0,20 ≤ R_{ADD} ≤ 0,90

### Sulfure de métal alcalin ou alcalino-terreux (a)

Par sulfures de métaux alcalins ou alcalino-terreux (a) utilisables dans le procédé selon l'invention, on entend désigner non seulement lesdits sulfures introduits en tant que tels dans le milieu de fabrication (polymérisation) du PPS, avant cette dernière, mais aussi les sulfures provenant de la réaction entre une source de soufre appropriée et une base appropriée, avant ou pendant la polymérisation.

Des exemples de sulfures de métaux alcalins qui peuvent être introduits en tant que tels dans le milieu de fabrication du PPS sont les sulfures de sodium, de potassium, de lithium, de rubidium, de césium et leurs mélanges. Des exemples de sulfures de métaux alcalino-terreux qui peuvent être introduits en tant que tels dans le milieu de fabrication du PPS sont les sulfures de calcium, de baryum et de strontium et leurs mélanges. Ces sulfures peuvent être utilisés sous forme anhydre, sous forme d'hydrates ou sous forme de solutions aqueuses. Parmi ces sulfures, les sulfures de sodium sont préférés pour des raisons d'accessibilité, et tout particulièrement le sulfure de sodium trihydraté.

Ces sulfures, notamment les sulfures de sodium, peuvent contenir, à l'état de traces sous forme d'impuretés, un hydro-génosulfure et un thiosulfate. Ces composés peuvent avantageusement être transformés en sulfure "in situ" par réaction avec une quantité appropriée d'hydroxyde du métal correspondant.

Comme mentionné plus haut, les sulfures (a) utilisables selon l'invention peuvent aussi provenir de la réaction entre une source de soufre et une base appropriées. Des exemples de sources de soufre appropriées sont les thiosulfates et hydro-sulfures de métaux alcalins et alcalino-terreux, le sulfure d'hydrogène et le disulfure de carbone. Ces sources de soufre doivent réagir, avant ou pendant la polymérisation, avec une base appropriée de manière à générer le sulfure présent pendant la polymérisation. Des exemples de bases appropriées sont les hydroxydes et les carbonates des métaux correspondants. Quoique la quantité de base mise à réagir avec la source de soufre puisse varier en fonction de la nature spécifique de cette dernière, cette quantité est généralement comprise entre la quantité stoechiométrique et un excès de 0,50 mole par rapport à cette dernière, de préférence entre la quantité stoechiométrique et un excès de 0,25 mole par rapport à cette dernière.

### Solvant organique polaire (b)

Le procédé de fabrication de PPS selon l'invention s'effectue au sein d'un solvant organique polaire (b) généralement choisi parmi les solvants organiques aprotiques tels que les amides, les lactames, les dérivés de l'urée et les composés organophosphorés cycliques. On préfère utiliser les amides et les lactames.

Des amides utilisables sont par exemple le formamide et ses dérivés N-substitués tels que le N,N-diméthylformamide; l'acétamide et ses dérivés N-substitués tels que le N,N-diméthylacétamide, le N,N-diéthylacétamide et le N,N-dipropylacétamide; le N,N-diméthylbenzoic amide, etc.

Des lactames utilisables sont par exemple le caprolactame et ses dérivés N-substitués tels que les N-alkylcaprolactames, par exemple le N-méthylcaprolactame, le N-éthylcaprolactame, le N-n-propylcaprolactame, le N-isopropylcaprolactame, le N-n-butylcaprolactame, le N-isobutylcaprolactame et le N-cyclohexyl-caprolactame; la pyrrolidone et ses dérivés N-substitués tels que les N-alkylpyrrolidones, par exemple la N-méthyl-2-pyrrolidone, la N-éthyl-2-pyrrolidone, la N-n-propyl-2-pyrrolidone, la N-isopropyl-2-pyrrolidone, la N-n-butyl-2-pyrrolidone, la N-isobutyl-2-pyrrolidone, la N-cyclohexyl-2-pyrrolidone, la N-méthyl-3-méthyl-2-pyrrolidone, la N-éthyl-3-méthyl-2-pyrrolidone et la N-méthyl-3,4,5-triméthyl-2-pyrrolidone; l'α-pipéridone et ses dérivés N-substitués tels que la N-méthyl-2-pipéridone, la N-éthyl-2-pipéridone, la N-propyl-2-pipéridone, la N-isopropyl-2-pipéridone, la N-méthyl-6-méthyl-2-pipéridone, la N-méthyl-3-éthyl-2-pipéridone, etc.

D'autres exemples de solvants organiques polaires sont la tétraméthylurée, la N-N'-diméthyléthylène urée, la N,N'-diméthylpropylène urée, le 1-méthyl-1-oxosulphorane, le 1-éthyl-1-oxosulphorane, le 1-phényl-1-oxosulphorane, le 1-méthyl-1-oxophosphorane, le 1-n-propyl-1-oxophosphorane, le 1-phényl-1-oxophosphorane, etc.

Des solvants organiques polaires particulièrement préférés sont les N-alkyllactames et les N-alkylpyrrolidones, tout particulièrement la N-méthylpyrrolidone.

### Carboxylate de métal alcalin ou alcalino-terreux (c)

Le mélange réactionnel qui est soumis à polymérisation selon l'invention contient un carboxylate de métal alcalin ou alcalino-terreux (c) dans des quantités critiques qui seront précisées plus loin. Par carboxylates de métaux alcalins ou alcalino-terreux, on entend désigner les sels dérivés d'un acide carboxylique et des métaux énoncés en rapport avec le sulfure (a).

Parmi tous les sels dérivés d'acides carboxyliques et de ces métaux, on peut citer à titre d'exemples, ceux qui sont dérivés :
- de monoacides aliphatiques : en particulier formiates, acétates, propionates, butyrates, valérates, hexanoates, laurates et cyclohexylacétates;
- de polyacides aliphatiques : en particulier oxalates, malonates, succinates, glutarates, adipates, pimélates, subérates, azélates et sébaçates;
- de monoacides aromatiques : en particulier benzoates, toluates, phénylacétates, β-phénylpropionates et γ-phénylbutyrates;
- de polyacides aromatiques : tels que les phtalates, isophtalates et téréphtalates.

Des carboxylates préférés sont les sels dérivés de monoacides aliphatiques et de métaux alcalins. L'acétate de sodium est tout particulièrement préféré.

### Eau (d)

Le mélange soumis à polymérisation selon l'invention contient de l'eau (d) dans des quantités critiques qui seront précisées plus loin.

L'eau (d) contenue dans ledit mélange peut :
(1) être présente sous la forme d'eau d'hydratation du sulfure (a) et/ou
(2) être introduite sous la forme d'eau libre dans le mélange et/ou
(3) être générée par la réaction entre une source de soufre et une base appropriée, telle que mentionnée plus haut, pour la formation "in situ" du sulfure (a). Par exemple, environ une mole d'eau est générée pour chaque mole de sulfure de métal alcalin ou alcalino-terreux par la réaction d'une mole d'hydrogénosulfure dudit métal avec une mole de l'hydroxyde correspondant.

### p-dihalobenzène (e)

Le mélange réactionnel qui est soumis à polymérisation selon l'invention contient un monomère, destiné à réagir avec le sulfure (a), qui est un p-dihalobenzène.

Par p-dihalobenzène utilisable dans le procédé selon l'invention, on entend désigner :
- le p-dichlorobenzène, le p-dibromobenzène, le p-diiodobenzène, le 1-chloro-4-bromobenzène et le 1-chloro-4-iodobenzène;
- d'un dihalobenzène substitué tel que le 2,5-dichlorotoluène, 2,5-dichloro-p-xylène, le 1-éthyl-2,5-dichlorobenzène, le 1-éthyl-2,5-dibromobenzène, le 1-éthyl-2-bromo-5-chlorobenzène, le 1,2,4,5-tétraméthyl-3,6-dichlorobenzène, le 1-cyclohexyl-2,5-dichlorobenzène, le 1-phényl-2,5-dichlorobenzène, le 1-benzyl-2,5-dichlorobenzène, le 1-phényl-2,5-dibromobenzène, le 1-p-toluyl-2,5-dichlorobenzène, le 1-p-toluyl-2,5-dibromobenzène, et le 1-hexyl-2,5-dichlorobenzène;
- d'un acide carboxylique aromatique dihalogéné.

Parmi tous ces p-dihalobenzènes, le p-dichlorobenzène est préféré.

L'utilisation de plusieurs composés aromatiques dihalogénés différents entre également dans le cadre de l'invention. Par le choix et la combinaison appropriés de ces composés, on peut obtenir des copolymères présentant deux ou plusieurs unités récurrentes différentes. Il peut s'agir de copolymères à blocs ou de copolymères statistiques.

### Autres ingrédients

L'introduction, dans le milieu de fabrication (polymérisation) du PPS de composés aromatiques trihalogénés, entre également dans le cadre de l'invention.

Des exemples de pareils composés sont le 1,2,3-trichlorobenzène et le 1,2,4-trichlorobenzène. Utilisés en faibles quantités (environ 1.10⁻⁴ à environ 1.10-2 mole par mole de composé aromatique dihalogéné), ces composés conduisent à l'obtention de PPS faiblement branchés et de poids moléculaire plus élevé.

### Polymérisation

Les conditions de polymérisation appropriées pour la réalisation du procédé selon l'invention peuvent varier dans une large mesure. Les conditions générales et caractéristiques de la polymérisation sont détaillées ci-après.

La constitution du mélange réactionnel se fait en mettant en contact entre eux au moins tous les ingrédients (a) à (e) définis plus haut dans des quantités respectives qui seront décrites ci-après. Cette mise en contact peut se faire en introduisant lesdits ingrédients ensemble ou successivement et dans un ordre quelconque dans le milieu de polymérisation.

Selon l'invention, la polymérisation est effectuée en une étape.

Par "polymérisation effectuée en une étape", il faut entendre que le mélange réactionnel est porté, progressivement et sans palier intermédiaire, à la température de polymérisation. Cette température est supérieure à 235 °C et inférieure à la température de décomposition du PPS.

De préférence, la température du mélange réactionnel est élevée en continu et sans palier de la température ambiante (environ 25 °C) à plus de 235 °C pendant une durée de 30 minutes à 10 heures, en particulier de 1 à 2 heures.

La température de polymérisation va de préférence de 240 °C environ à 290 °C environ, tout particulièrement de 240 à 270 °C. Dans ces limites, le mélange réactionnel peut être maintenu à une température déterminée pour une durée de 1 à 30 heures, de préférence de 1 à 10 heures. Dans ces limites, également, le mélange réactionnel peut être maintenu à au moins un palier intermédiaire de température, par exemple pour la moitié de la durée totale de la polymérisation.

La pression de polymérisation est généralement autogène et suffisante pour maintenir le composé aromatique dihalogéné et l'eau contenus dans le mélange réactionnel sous forme liquide.

Les ingrédients essentiels du mélange réactionnel sont généralement présents dans les quantités et rapports respectifs définis ci-après.

La quantité dans laquelle il est fait usage du solvant organique polaire (b) utilisée pour exécuter le procédé selon l'invention n'est pas critique et peut varier dans une large mesure. Exprimée en poids, cette quantité est généralement de 0,5 à 20 fois le poids de sulfure (a) utilisé; de préférence, la quantité de solvant organique polaire (b) est de 1 à 10 fois, tout particulièrement de 2 à 5 fois le poids de sulfure (a).

Pour obtenir des PPS de poids moléculaire suffisamment élevé, le p-dihalobenzène (e) est utilisé à raison de 0,9 à 1,1 mole par mole de sulfure (a); de préférence, le p-dihalobenzène (e) est utilisé à raison de 0,98 à 1,05 mole par mole de sulfure (a).

Le rapport molaire entre l'eau (d) et le sulfure (a) mis en oeuvre est une des caractéristiques essentielles du procédé selon l'invention. Ce rapport (appelé ci-après 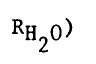 doit être tel qu'il satisfasse à la relation :

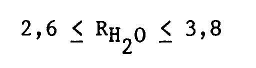

De préférence, 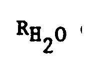 est tel que :

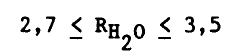

Des résultats particulièrement favorables ont été obtenus avec des tels que :

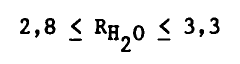

On comprendra dès lors qu'un mode de réalisation tout particulièrement préféré du procédé selon l'invention implique l'utilisation, tel quel et sans étape de déshydratation préalable, de sulfure de sodium trihydraté commercial à titre de sulfure (a).

Par "eau (d) mise en oeuvre" et "sulfure (a) mis en oeuvre", il faut entendre aussi bien les quantités de ces constituants qui sont introduites dans le mélange réactionnel que celles qui peuvent y être générées comme mentionné plus haut.

Le rapport molaire entre le carboxylate de métal alcalin (c) et le sulfure (a) mis en oeuvre est une autre caractéristique essentielle du procédé selon l'invention. Ce rapport (appelé ci-après R_{ADD}) doit être tel qu'il satisfasse à la relation :

0,20 ≤ R_{ADD} ≤ 0,90

De préférence, R_{ADD} est tel que :

0,20 ≤ R_{ADD} ≤ 0,80

Des résultats particulièrement favorables ont été obtenus avec des R_{ADD} tels que :

0,30 ≤ R_{ADD} ≤ 0,75

On notera que pour arriver à l'objectif visé par la présente invention, à savoir l'obtention de PPS, de haut poids moléculaire, en une seule étape, il ne suffit pas que chacun des rapports 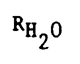 ou R_{ADD} soit satisfait isolément. Il est essentiel que le mélange réactionnel satisfasse à la fois aux domaines de valeurs de 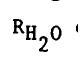 et de R_{ADD} mentionnées plus haut, le meilleur compromis du couple des valeurs de 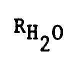 et R_{ADD} à l'intérieur des domaines définis pouvant être aisément atteint par quelques essais de routine.

Après sa fabrication, le PPS obtenu peut être séparé du milieu de polymérisation par tout moyen conventionnel. Par exemple, la suspension de polymère refroidie peut être filtrée, le polymère recueilli peut être lavé à l'eau et séché.

Les PPS obtenus selon le procédé de l'invention peuvent être mélangés de manière conventionnelle avec d'autres polymères, des pigments, des charges (fibres de verre, talc, carbonate de calcium, silice, mica, poudres métalliques, poudre de quartz, billes de verre, fibres de carbone, graphite, noir de carbone), des stabilisants et des lubrifiants.

Les PPS obtenus selon le procédé de l'invention peuvent être transformés par les méthodes de moulage connues en objets injectés, pour usages dans des applications électriques, électroniques et mécaniques, en films, en fibres. Ils peuvent aussi constituer la base de compositions liquides de revêtement, de compositions pour l'encapsulation de composants microélectroniques ou encore la matrice de composites thermiquement et mécaniquement résistants.

Les exemples suivants illustrent l'invention.

### Exemple 1

On charge un autoclave de 1 l en titane avec :
- 70 g de Na₂S.3H₂O contenant 0,52 mole de Na₂S, 0,03 mole de NaHS et 1,55 mole d'eau;
- 1,77 g (0,04 mole) de NaOH;
- 81,46 g (0,55 mole) de para-dichlorobenzène (PDCB);
- 1,24 g (0,07 mole) d'eau;
- 220 g de N-méthylpyrrolidone (NMP);
- 27,04 g (0,33 mole) d'acétate de sodium (AcONa).

Compte tenu des réactions d'échange qui se produisent entre les impuretés soufrées du Na₂S.3H₂O et la soude (NaOH), la teneur effective du mélange réactionnel en Na₂S est 0,55 mole et la teneur effective du milieu en eau est 1,65 mole.

Les valeurs de 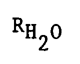 et R_{ADD} sont donc les suivantes :

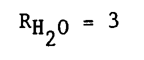

R_{ADD} = 0,6

Après avoir fermé l'autoclave, on le pressurise sous 2 bars d'azote.

La température est portée à 265 °C, avec un four électrique externe. Le mélange réactionnel est maintenu à 265 °C pendant 3 heures en agitant.

Après refroidissement, le mélange est sorti de l'autoclave et traité avec un excès d'eau. Le polymère est lavé avec de l'eau jusqu'à disparition du sel dans le filtrat.

Ensuite, le polymère est lavé deux fois avec de l'acétone pour extraire les oligomères solubles dans ce solvant. A la fin du deuxième lavage, les granules de différentes tailles sont séparées en passant le polymère mis en suspension dans l'acétone sur un tamis de 250 µm. Après une filtration séparée des deux phases granulométriques, les polymères sont séchés en étuve sous vide à 80 °C.

Le rendement en polymère est le suivant :
2 % d'extrait à l'acétone
8 % de granules fins (< 250 µm)
85 % de granules gros (> 250 µm).

La conversion en monomères est d'environ 97 %.

La viscosité inhérente (ηᵢₙₕ) des granules fins (mesurée dans le 1-chloronaphtalène à 206 °C et à une concentration de 10 g/l) vaut 0,14 dl/g. La ηᵢₙₕ des gros granules vaut 0,27 dl/g.

### Exemple 2

On opère comme à l'exemple 1, sauf que le mélange réactionnel est porté à la température de 240 °C pour une durée de 90 minutes, puis à la température de 265 °C pour une durée de 90 minutes.

Le polymère recueilli est séparé en deux fractions granulométriques (tamis 250 µm). Les particules les plus fines (11 %) ont une ηᵢₙₕ de 0,16 dl/g. Celles de plus haute granulométrie (82 %) ont une ηᵢₙₕ de 0,28 dl/g.

### Exemple 3R

Cet exemple est fourni à titre comparatif.

Un autoclave de 1 l en titane est chargé avec 70 g de Na₂S.3H₂O (0,53 mole en Na₂S), 125 g de NMP, 27 g (0,33 mole) d'AcONa et 0,89 g (0,022 mole) de NaOH.

Le mélange réactionnel est porté progressivement à 208 °C et 37 g d'un mélange de NMP et eau sont distillés. La température de l'autoclave est alors diminuée jusqu'à 160 °C, température à laquelle les ingrédients suivants sont ajoutés : une solution de 81,83 g (0,56 mole) de PDCB dans 113 g de NMP et une solution aqueuse de soude contenant 0,29 g (0,01 mole) de NaOH dans 6,38 g de H₂O. Les valeurs de 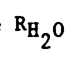 et R_{ADD} sont respectivement 1,5 et 0,6.

La température du réacteur est portée à 240 °C pour 90 minutes puis à 265 °C pour également 90 minutes.

Le polymère est séparé en deux fractions granulométriques (tamis 250 µm). Les particules les plus fines (5 %) ont une viscosité inhérente de 0,18 dl/g. Celles de plus haute granulométrie (86 %) ont une viscosité inhérente de 0,30 dl/g.

On constate donc que l'obtention de PPS de poids moléculaire semblable à celui de l'exemple 2 ne peut se faire qu'au prix d'un procédé plus long, effectué en deux étapes, avec déshydratation préalable du sulfure de sodium.

### Exemple 4R

Cet exemple est fourni à titre comparatif.

Un autoclave de 0,5 l en titane est chargé avec 50 g de Na₂S.3H₂O (0,37 moles en Na₂S), 154,68 g de NMP, 1,22 g (0,03 mole) de NaOH, 0,36 g de H₂O et 57,41 g (0,39 mole) de PDCB.

Le mélange est chauffé à 265 °C et maintenu à cette température pendant 3 h.

Le polymère obtenu (rendement 79 %) possède une viscosité inhérente de 0,07 dl/g seulement.

### Exemples 5 et 6R à 10R

Les exemples 6R à 10R sont fournis à titre comparatif.

On opère selon le mode opératoire général de l'exemple 2 mais avec des 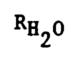 et des R_{ADD} qui sont mentionnés au tableau ci-après.

Les résultats obtenus sont aussi mentionnés dans ce tableau.

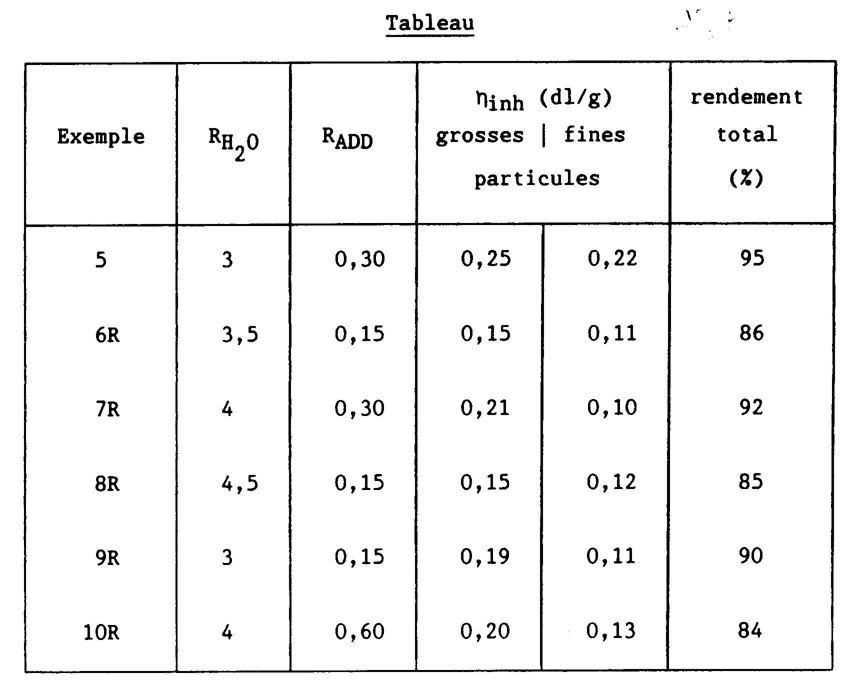

## Revendications

1. Procédé pour la fabrication de poly(sulfure de phénylène) consistant à polymériser en une étape un mélange réactionnel comprenant les constituants suivants :
- un sulfure de métal alcalin ou alcalino-terreux (a);
- un solvant organique polaire aprotique (b);
- un carboxylate de métal alcalin ou alcalino-terreux (c);
- de l'eau (d);
- un p-dihalobenzène (e); caractérisé par la combinaison, dans ledit mélange, d'un rapport molaire 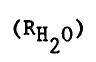 entre l'eau (d) et le sulfure (a) mis en oeuvre tel que : 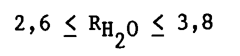 et d'un rapport molaire (R_{ADD}) entre le carboxylate (c) et le sulfure (a) mis en oeuvre tel que :
0,20 ≤ R_{ADD} ≤ 0,90

2. Procédé selon la revendication 1, caractérisé en ce que le sulfure (a) est un sulfure de sodium.

3. Procédé selon la revendication 1 ou 2, caractérisé en ce que le solvant (b) est un dérivé N-substitué de la pyrrolidone.

4. Procédé selon l'une quelconque des revendications 1 à 3, caractérisé en ce que le carboxylate (c) est un sel dérivé d'un monoacide aliphatique et de sodium.

5. Procédé selon l'une quelconque des revendications 1 à 4 caractérisé en ce que la température du mélange réactionnel est portée progressivement et sans palier intermédiaire de 25 °C à plus de 235 °C.

6. Procédé selon l'une quelconque des revendications 1 à 5, caractérisé en ce que le mélange réactionnel est maintenu de 240 °C à 290 °C pour une durée de 1 à 10 heures.

## Claims

1. Process for preparing poly(phenylene sulphide) consisting in polymerizing in one step a reaction mixture comprising the following constituents :
- an alkali metal or alkaline earth metal sulphide (a);
- an aprotic polar organic solvent (b);
- an alkali metal or alkaline earth metal carboxylate (c)
- water (d); and
- a p-dihalobenzene (e); characterized by the combination in the said mixture of a molar ratio 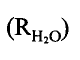 between the water (d) and the sulphide (a) employed such that : 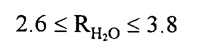 and of a molar ratio (R_{ADD}) between the carboxylate (c) and the sulphide (a) employed such that :
0.20 ≤ R_{ADD} ≤ 0.90.

2. Process according to Claim 1, characterized in that the sulphide (a) is a sodium sulphide.

3. Process according to Claim 1 or 2, characterized in that the solvent (b) is an N-substituted pyrrolidone derivative.

4. Process according to any one of Claims 1 to 3, characterized in that the carboxylate (c) is a salt derived from an aliphatic monoacid and sodium.

5. Process according to any one of Claims 1 to 4, characterized in that the temperature of the reaction mixture is raised gradually and without an intermediate plateau from 25 °C to more than 235 °C.

6. Process according to any one of Claims 1 to 5, characterized in that the reaction mixture is held at from 240 °C to 290 °C for a period of from 1 to 10 hours.

## Patentansprüche

1. Verfahren zur Herstellung von Poly(phenylensulfid), das daraus besteht, in einem Schrift ein Reaktionsgemisch zu polymerisieren, das die folgenden Bestandteile umfasst:
- ein Alkalimetall- oder Erdalkalimetallsulfid (a);
- ein aprotisches polares organisches Lösungsmittel (b);
- ein Alkalimetall- oder Erdalkalimetallcarboxylat (c);
- Wasser (d);
- ein p-Dihalogenbenzen (e); gekennzeichnet durch die Kombination in diesem Gemisch von einem solchen Molverhältnis 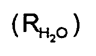 zwischen dem eingesetzten Wasser (d) und dem eingesetzten Sulfid (a), dass: 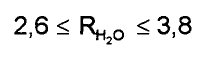 und einem solchen Molverhältnis (R_{ADD}) zwischen dem eingesetzten Carboxylat (c) und dem eingesetzten Sulfid (a), dass:
0,20 ≤ R_{ADD} ≤ 0,90.

2. Verfahren gemäß Anspruch 1, dadurch gekennzeichnet, dass das Sulfid (a) ein Natriumsulfid ist.

3. Verfahren gemäß Anspruch 1 oder 2, dadurch gekennzeichnet, dass das Lösungsmittel (b) ein N-substituiertes Pyrrolidonderivat ist.

4. Verfahren gemäß einem der Ansprüche 1 bis 3, dadurch gekennzeichnet, dass das Carboxylat (c) ein von einer aliphatischen Monosäure und Natrium abgeleitetes Salz ist.

5. Verfahren gemäß einem der Ansprüche 1 bis 4, dadurch gekennzeichnet, dass die Temperatur des Reaktionsgemisches allmählich und ohne Zwischenstufe von 25 °C auf mehr als 235 °C gebracht wird.

6. Verfahren gemäß einem der Ansprüche 1 bis 5, dadurch gekennzeichnet, dass das Reaktionsgemisch für eine Dauer von 1 bis 10 Stunden auf 240 °C bis 290 °C gehalten wird.
